# EUROPÄISCHE PATENTSCHRIFT

(11) **EP 1 242 796 B1**
(45) Veröffentlichungstag und Bekanntmachung des Hinweises auf die Patenterteilung: **25.06.2003**
(21) Anmeldenummer: 00987156.7
(22) Anmeldetag: 16.11.2000
(51) Int. Cl.: G01L 5/22, G01L 1/20, G01L 5/16

(54) **TAKTILSENSOR MIT DRUCKABHÄNGIGEM KONTAKTWIDERSTAND ZWISCHEN ZWEI LEITFÄHIGEN WERKSTÜCKEN**
TACTILE SENSOR HAVING A PRESSURE-DEPENDENT CONTACT RESISTANCE BETWEEN TWO CONDUCTIVE WORKPIECES
CAPTEUR TACTILE AYANT UNE RESISTANCE DE CONTACT DEPENDANT DE LA PRESSION ENTRE DEUX PIECES CONDUCTRICES

(30) Priorität: 10.12.1999 DE 19959703
(43) Veröffentlichungstag der Anmeldung: 25.09.2002
(73) Patentinhaber: SIEMENS AKTIENGESELLSCHAFT, 80333 München (DE)
(72) Erfinder: MAGNUSSEN, Björn, Berkeley 94704-1074, CA 81739 (US); VALFORT, Cyril, F-42260 Bussy-Albieux (FR)
(86) Internationale Anmeldenummer: DE0004064
(87) Internationale Veröffentlichungsnummer: WO01042754

(56) Entgegenhaltungen:
- DE-A- 19 750 671
- US-A- 4 492 949
- US-A- 4 687 885
- PATENT ABSTRACTS OF JAPAN vol. 011, no. 022 (P-538), 21. Januar 1987 (1987-01-21) & JP 61 195324 A (NITTA KK), 29. August 1986 (1986-08-29)
- PATENT ABSTRACTS OF JAPAN vol. 007, no. 090 (P-191), 14. April 1983 (1983-04-14) & JP 58 017331 A (KOGYO GIJUTSUIN;OTHERS: 0J), 1. Februar 1983 (1983-02-01)
- WELLHAUSEN H: "TASTSENSOR MIT FINGERSPITZENGEFUEHL. \FLAECHENMAESSIGE ERFASSUNG VON KRAEFTEN MIT EINFACHEN MITTELN" ELEKTRONIK,DE,FRANZIS VERLAG GMBH. MUNCHEN, Bd. 40, Nr. 10, 14. Mai 1991 (1991-05-14), Seiten 66-68, XP000229062 ISSN: 0013-5658

## Beschreibung

Die vorliegende Erfindung betrifft einen Taktilsensor und Verfahren zum Betreiben desselben.

Das Grundprinzip eines Taktilsensors, auch Tastsensor genannt, ist es, einen Kontakt zwischen einem Objekt und der sensorischen Oberfläche des Taktilsensors, der Tastfläche, zu messen. Im Gegensatz zu einem technischen Druck- oder Kraftsensor wird kein Sensorsignal verlangt, das direkt zur aufgebrachten Kraft proportional ist. Vielmehr steht in der Regel eine kostengünstige Abdeckung einer großen Fläche im Mittelpunkt.

Bisher sind vor allem vier Verfahren zur Implementierung eines großflächigen Taktilsensors bekannt:
- Die Tastfläche entspricht einer feste Platte, die an einigen Punkten beweglich aufgehängt ist, so daß bei einer Kraftaufbringung Schaltkontakte betätigt werden. Es kann weder eine Stärke noch ein Ort des Drucks gemessen werden und es kann bei einer großen Tastfläche keine hohe Empfindlichkeit des Sensors erreicht werden.
- Die Tastfläche wird mit einem elastischen und luftdurchlässigen Material bezogen, welches sich in einer luftdichten Hülle befindet. Innerhalb der luftdichten Hülle sind Luftdrucksensoren angebracht. Mit dieser Methode ist keine Ortsauflösung oder Kraftaufgabe möglich.
- Die Tastfläche wird mit einer druckempfindlichen Folie nach kapazitivem oder piezoelektrischem Prinzip bespannt. Bei dieser Methode kann im allgemeinen nur eine Änderung der Kraftaufgabe erfaßt werden.
- Bei einem Foliendrucksensor wird ein leitendes Kunststoffmaterial auf eine Interdigitalstruktur aufgebracht, wobei ein zunehmender Druck auf die Tastfläche sich in einem abnehmenden Widerstand zwischen den beiden Elektrodenkämmen niederschlägt. Es können auch weitere Schichten, beispielsweise zur Abdeckung und Isolation verwendet werden. Ein Foliendrucksensor ist vergleichsweise aufwendig herzustellen.
- In einem Katalog der Firma MicroTouch Systems ist eine Schreibtafel beschrieben, welche nach dem resistiven Sensorprinzip arbeitet. Dazu wird eine dünne untere Polyesterschicht auf einer starren Unterlage befestigt, und darüber eine dünne obere Polyesterschicht gespannt. Die obere Polyesterschicht steht unter einer Zugspannung und ist von der unteren Polyesterschicht durch eine Lücke getrennt. Die sich gegenüberliegenden Oberflächen der beiden Polyesterschichten sind mit einem leitfähigen Material beschichtet. Bei Druckaufgabe auf die obere Polyesterschicht wird diese auf die untere Polyesterschicht gedrückt und es wird ein elektrischer Kontakt geschlossen, dessen Position bestimmbar ist.

Ein aus US-A-4687885 bekannter Taktilsensor weist zwei leitfähige Werkstücke auf, die aufeinander an einer Auflagefläche aufliegen, wovon mindestens ein Werkstück aus Elastomer gefertigt ist, so dass ein mindestens von einem Druck auf die Auflagefläche abhängiger Kontaktwiderstand zwischen den beiden Werkstücken messbar ist.

Aus der DE19750671 ist es bekannt, einen leitfähigen Schaumstoff in einem Sensor zur Messung von mechanischen Kräften vorzusehen, wobei der unter Krafteinwirkung veränderliche Widerstand des Schaumstoffs unter Verwendung zweier Elektroden gemessen wird.

Es ist die Aufgabe der vorliegenden Erfindung, einen vielseitigen und kostengünstigen Taktilsensor mit einfachem Aufbau bereitzustellen.

Diese Aufgabe wird durch einen Taktilsensor gemäß Patentanspruch 1 und durch Verfahren zum Betrieb desselben gemäß der Patentansprüchen 9 und 10 gelöst. Vorteilhafte Ausgestaltungen sind den Unteransprüchen entnehmbar.

Der Taktilsensor weist mindestens zwei leitfähige Werkstücke auf, die an einer gemeinsamen Auflagefläche aufeinander liegen. An der Auflagefläche stehen die Werkstücke also miteinander in mechanischem Kontakt. Von den mindestens zwei leitfähigen Werkstücken besteht mindestens ein Werkstück aus leitfähigem Elastomermaterial, im folgenden Elastomerstück genannt.

Das Elastomerstück ist sowohl elastisch als auch leitfähig. Bei einer Aufgabe einer Kraft F auf das Elastomerstück, so daß dieses gegen das andere Werkstück gedrückt wird, ändert sich der Kontaktwiderstand bzw. der Oberflächen-Übergangsleitwert am druckbeaufschlagten Teil der Auflagefläche, im folgenden Kontaktfläche genannt.

Der Kontaktwiderstand ist im allgemeinen abhängig von der Kontaktfläche und vom aufgebrachten Druck, während der elektrische Leitwert im Innenvolumen des Elastomerstücks nur gering von der mechanischen Belastung abhängig ist. Typischerweise sinkt der Kontaktwiderstand, je größer die Kontaktfläche und je stärker der Druck ist.

Im Gegensatz zum Foliendrucksensor benötigt der Taktilsensor nur eine, zudem ausgedehnte, Auflagefläche zwischen zwei Werkstücken. Auch braucht das Werkstück nicht mechanisch gespannt zu sein wie beim Sensor der Firma MicroTouch. Durch die mechanische Auflage der Werkstücke muß auch keine aufwendige Einstellung eines Abstandes vorgenommen werden.

Die Auflagefläche des Taktilsensors ist auch nicht auf eine ebene Form beschränkt, wie dies bei Foliendrucksensor und beim Sensor der Firma MicroTouch der Fall ist. Es entfällt bei dem Taktilsensor weiterhin die Notwendigkeit einer Strukturierung der Auflagefläche. Die Werkstücke und die Auflagefläche können auch Aussparungen aufweisen.

Beispielsweise mittels Ausmessung eines Stromflusses durch die Kontaktfläche oder eines den Kontaktwiderstand berücksichtigenden Widerstandswertes kann eine Kraftaufbringung gemessen werden. Dazu können z. B. die Werkstücke mit Elektroden ausgerüstet sein.

Neben einer Information über eine Stärke der äußeren Kraft lassen sich bei geeigneter Beschaltung auch die Position der Kontaktfläche und ihre Größe ermitteln.

Es ist ausreichend, wenn eines der Werkstücke aus Elastomermaterial angefertigt ist. Das andere Material kann beispielsweise aus Metall sein, z. B. ein Blech oder eine Folie. Bei einer solchen Anordnung ist allerdings eine eingeschränkte Ortsauflösung und Flexibilität gegeben.

Eine Spannungsaufgabe und/oder Messung eines Kontaktwiderstands kann beispielsweise über mit den Werkstücken verbundene Elektroden geschehen, z. B. im Elastomer eingelassenen Elektroden, oder durch andere Mittel zum elektrischen Kontakt mit den Werkstücken. Im folgenden wird das Mittel zum elektrischen Kontakt nichteinschränkend als Elektrode bezeichnet.

Gemessen wird eine Summe von Widerständen, unter anderem ein Übergangswiderstand von der Elektrode zum Werkstück, ein Längswiderstand entlang oder durch das Werkstück sowie ein Kontaktwiderstand von einem Werkstück zum anderen. Für jede mechanische Anordnung ist die Zusammensetzung der Widerstandswerte für eine gegebene Kontaktsituation bekannt, so daß sich der gesuchte Kontaktwiderstand berechnen läßt.

Ein solcher Taktilsensor weist den Vorteil auf, daß er sehr einfach aufgebaut ist und damit kostengünstig herstellbar ist. Zudem ist er haltbar, aufprallbeständig und gut deformierbar.

Es ist vorteilhaft, wenn mindestens zwei aufeinanderliegende Werkstücke aus Elastomermaterial bestehen, weil so eine vergleichsweise geringe Kraftaufgabe zu einer gut meßbaren Änderung des Kontaktwiderstands führt. Dadurch wird eine gute Sensitivität und Ortsauflösung des Sensorsignals möglich. Zudem ist ein solcher Sensor flexibel, leicht und preiswert.

Es ist zur Einstellung einer unteren Detektionsschwelle vorteilhaft, wenn zwischen zwei Werkstücken eine Zwischenschicht eingebracht ist, z. B. eine elektrisch isolierende, durchbrochene Schicht zur Abstandswahrung der beiden Werkstücke.

Es ist vorteilhaft, wenn jedes Elastomerstück mindestens eine Elektrode aufweist, welche an das jeweilige Elastomerstück gedrückt wird. Durch den Anpreßdruck wird ein störender Übergangswiderstand zwischen Elektrode und Elastomerstück minimiert. Der Anpreßdruck kann extern angelegt sein, z. B. durch Klemmen, Schrauben und Zwingen, oder intern dadurch, daß die Elektroden in das Elastomerstück eingelegt und unter Druck befestigt, z. B. verschweißt oder verklebt, werden.

Es ist zur vereinfachten Auswertung vorteilhaft, wenn zumindest die Elastomerstücke in einer gleichmäßigen Form vorliegen, insbesondere als Quader. Es sind aber auch andere Geometrien möglich, z. B. halbschalenförmig, dreieckig oder kastenförmig. Auch sind durchbrochene Werkstücke anwendbar, beispielsweise mit Aussparungen oder Schlitzen.

Position und Form der Elektroden ist nicht eingeschränkt, z. B. sind zwei punktförmige Elektroden in gegenüberliegenden Ecken jedes Werkstücks möglich. Aber günstigerweise sind an jedem Werkstück mindestens zwei Elektroden an gegenüberliegenden Seiten angebracht, insbesondere entlang der an die Auflagefläche seitlich angrenzenden Seitenflächen.

Es ist zur vereinfachten Auswertung und gleichmäßigen Aufbringung eines Spannungsfeldes vorteilhaft, wenn an jedem quaderförmigen Werkstück Elektroden parallel zur Auflagefläche angebracht sind, insbesondere über die gesamte Länge der Seitenflächen ("Kantenelektroden"). Dabei können die Elektroden der beiden Quader entweder zueinander parallel angeordnet sein oder so, daß jedes Elektrodenpaar zueinander um einem Winkel versetzt ist, insbesondere um 90° zwischen erstem Elektrodenpaar und zweitem Elektrodenpaar.

Liegt beispielsweise die Grundfläche eines quaderförmigen Werkstücks in der (x,y)-Ebene und beinhaltet die Grundfläche die Auflagefläche, so ist die Seitenfläche durch eine der Oberflächen mit einer z-Komponente gegeben, beispielsweise in der (x,z)-Ebene oder der (y,z)-Ebene. Als Tastfläche könnte dabei die der Auflagefläche entgegengesetzte Fläche des Werkstücks dienen.

Es kann sinnvoll sein, mehrere Elektroden zu verbinden und dadurch eine elektrische Verknüpfung der Widerstandswerte zu erhalten.

Insbesondere ist es günstig, wenn der Taktilsensor so ausgelegt ist, daß der Übergangswiderstand sehr viel kleiner ist als der Längswiderstand, welcher wiederum sehr viel kleiner sein sollte als der Kontaktwiderstand Rs.

Zur Widerstandsmessung werden zweckmäßigerweise, aber nicht einschränkend, die zwei folgenden Verfahren benutzt:

Entweder wird eine bekannte oder meßbare Spannung an die Elektroden angelegt, und der Stromfluß direkt oder indirekt, z. B. über einen Spannungsabfall an einem Widerstand, gemessen. Alternativ kann ein definierter Stromfluß vorgegeben sein, und die Spannung direkt oder indirekt gemessen werden.

Oder es wird ein Spannungsteiler aus dem zu bestimmenden und einem meßbaren Widerstand gebildet, so daß der Widerstand aus dem Spannungsverhältnis bestimmbar ist. Dabei kann der Vergleichswiderstand auch durch einen Teil des Werkstücks selbst gebildet werden.

Bei dem erfindungsgemässen Taktilsensor ist das Elastomermaterial ein Schaumstoff, insbesondere ein geschlossenzelliger und leitfähiger Schaumstoff, insbesondere EVAZOTE® der Produktfamilie ZOATEFOAMS.

Ein Vorteil eines aus einem Schaumstoff, insbesondere EVAZOTE®, aufgebauten Taktilsensors besteht darin, daß seine Oberfläche einen Prallschutz bietet. Dadurch können beispielsweise Personen, die mit der taktilen Oberfläche kollidieren, bereits einen großen Teil der Aufprallenergie an das weiche Sensormaterial abgeben. Es kommt deshalb zu geringeren Verletzungen. Für den Fall, daß häufig eine Kollision unter einem sehr schrägen Auftreffwinkel stattfindet, können zwei Schaumstoffquader, beispielsweise mit einigen Heißkleberpunkten im Abstand einiger Zentimeter fixiert werden. Zwar reduziert dies die Sensorempfindlichkeit, stellt aber bei einer größeren taktilen Fläche, wie sie z. B. zur Personendetektion einsetzbar ist, keine Einschränkung dar.

Speziell das Material EVAZOTE® besitzt den Vorteil, daß es inert und leicht ist. Es besitzt auch eine höhere Steifigkeit und Reißfestigkeit als die bekannten, oft eingesetzten PU-Schaumstoffe. Zudem ist es in hohem Maße energieabsorbierend. Zu seiner Fabrikation können gut bekannte Methoden verwendet werden, es ist auch einfach thermoformbar. Auch günstig ist seine Temperatur-, chemische und Wasserbeständigkeit. Durch EVAZOTE® werden Metalle nicht korrodiert, und es zeigt eine hohe UV-Stabilität.

EVAZOTE® weist zudem einen geringen elektrischen Innenwiderstand von ca. 100 Ω/cm auf. Der Oberflächenwiderstand hingegen ist im drucklosen Zustand sehr hoch, entsprechend einer hohen Impedanz. Bei Druckaufgabe kann er sich auf bis zu einige kΩ verringern. Somit muß EVAZOTE® nicht mehr aufwendig beschichtet werden.

Das Elastomermaterial, beispielsweise EVAZOTE®, steht oft in Form von Platten verschiedener Dicke zur Verfügung. Die Dicke des Materials und die Größe der Auflagefläche eines Taktilsensors besitzen einen Einfluß auf die Meßgenauigkeit und die Signalempfindlichkeit. Das Ansprechverhalten läßt sich über die Dimensionierung der Elastomerstücke und die Art der elektrischen Beschaltung in weiten Grenzen angepaßt einstellen.

Als Material für die Elektroden, insbesondere bei Verwendung als Kantenelektroden, eignet sich allgemein jedes leitfähige Material, welches nicht korrodiert. Es ist jedoch vorteilhaft, wenn das Elektrodenmaterial im aktiven, d.h. deformierbaren Bereich des Taktilsensors flexibel ist. In diesem Bereich werden beispielsweise spiralförmig gewickelte Drähte bevorzugt, weil diese eine Verformung problemlos vertragen und auch eine Längenänderung innerhalb weiter Grenzen aushalten, ohne daß eine zu hohe Zugkraft auftritt. Besonders gut geeignet ist ein Drahtgestrick, welches üblicherweise als Kontaktmaterial an hochfrequenzdichten Türen Verwendung findet. Dieses Drahtgestrick zeigt Elastizität bzgl. Druck quer zu seinem Durchmesser sowie längs des Drahtes. Ebenfalls denkbar sind leitfähig gemachte Kunststoffe (Gummischnüre etc.), bei denen jedoch in der Regel ein zusätzlich auftretender elektrischer Widerstand berücksichtigt werden muß.

Die Aufbringung der Kantenelektroden muß sorgfältig vorgenommen werden, damit der Übergangswiderstand zum Elastomermaterial möglichst gering gehalten wird. Zur Aufbringung wird die Elektrode bevorzugt gegen das Elastomermaterial gedrückt, so daß ein Übergangswiderstand minimiert ist.

Zur schnellen und günstigen Einarbeitung wird eine Vorrichtung bevorzugt, welche an der Seitenfläche des Elastomerquaders entlang gefahren werden kann. Sie besitzt eine Führung, so daß sie genau über die Elastomerkante gleitet. Im Zentrum dieser Führung sitzt ein Messer, welches den Schaumstoff auf einer Tiefe von einigen Millimetern aufschneidet. In den so entstandenen Schlitz wird die jeweilige Elektrode eingelegt. Dazu ist hinter dem Messer eine Führung angebracht, aus welcher das Elektrodenmaterial austritt. Die Führung, beispielsweise ein Röhrchen, bewirkt, daß die Elektrode maximal in den Schlitz einführbar ist. Hinter der Führung verengt sich die seitliche Führung des Werkzeugs, wodurch ein seitlicher Druck erzeugt wird, welcher notwendig ist, um einen geringen Übergangswiderstand zwischen Elektrode und Elastomermaterial zu erreichen. Noch im Bereich der Verengung befindet sich eine Verschweißeinheit. Sie kann beispielsweise aus einem Infrarotstrahler oder einer heißen Rolle bestehen und verschweißt den mit dem Messer eingebrachten Schlitz. Die Verengung der seitlichen Führung ist so lang ausgeführt, daß sie die Verengung auch noch bei einer signifikanten Abkühlung des Elastomermaterials aufrechterhält. Das unter einem Druck verschweißte Elastomermaterial bewirkt einen beständigen Druck auf das Elektrodenmaterial und somit einen konstanten und niedrigen Übergangswiderstand.

Es ist zur Ausdehnung des Meßbereichs vorteilhaft, wenn mehr als zwei Werkstücke aufeinander aufliegen, die sich beispielsweise in der Dicke und/oder ihren Materialeigenschaften, wie Dichte, Leitfähigkeit etc., voneinander unterscheiden. Es können auch mehrere Taktilsensoren mit unterschiedlichem Empfindlichkeitsbereich gestapelt werden.

Insbesondere die Elastomerstücke können auch als dreidimensionale Formteile eingesetzt bzw. produziert werden. So kann
- jedes Elastomerstück aus einem größeren Block herausgesägt werden, beispielsweise mittels eine Schneidedrahtanlage. Dabei können beispielsweise die mindestens zwei Elastomerstücke gleichzeitig produziert werden, was den Verschnitt verringert;
- jedes Elastomerstück aus mehreren Platten zusammengeschweißt werden, wodurch leitfähige Verbindungen entstehen. Der Taktilsensor kann dann z. B. eine gerundete oder kantige Form aufweisen, wobei das Sensorprinzip auch über diese Kante funktionsfähig bleibt. Selbstverständlich ist er nicht auf eine eckige oder kantige Form beschränkt;
- jedes Elastomerstück in eine speziell gefertigte Form eingebracht, z. B. gegossen oder geschäumt, werden. So läßt sich die größte Freiheit in der Formgebung realisieren;
- ein Taktilsensor mit verschiedenen anderen Sensoren, z. B. einem weiteren Taktilsensor, aneinander geklebt werden. Dazu eignen sich beispielsweise handelsübliche doppelseitige Klebebänder, die eine feste Verbindung gewährleisten. Ebenso ist eine Verklebung mit einem Heißkleber möglich, welche jedoch im nachhinein kaum noch zerstörungsfrei lösbar ist. Bei einer Verbindung mehrerer Sensoren sollte auch beachtet werden, daß diese untereinander elektrisch isoliert sein sollten. Es empfiehlt sich außerdem, auf die Oberfläche eine elektrisch isolierende Kunststoffschicht, z. B. eine Schaumstoffschicht, aufzubringen, welche zusätzlich eine dekorative oder verschleißmindernde Funktion aufweisen kann.

Es ist zur einfachen Anwendung auch günstig, wenn der Taktilsensor aus einer durchgehenden Metallfläche und einem leitfähigen Elastomerstück besteht. Bei dieser Anordnung kann allerdings kein linearer Spannungsabfall in mehreren Richtungen erzeugt werden. Eine solche Anordnung ist besonders dann sinnvoll, wenn schon eine Metallfläche an dem mit dem Taktilsensor auszurüstenden Gerät vorhanden ist. Eine Metallfläche kann in einer solchen Anordnung auch für mehrere Sensoren gleichzeitig benutzt werden (ohne Isolation). Beispielsweise kann die Metallflächen eine Fahrzeugmasse sein.

Zum Betreiben des Taktilsensors ist es vorteilhaft, wenn das erste Werkstück und das zweite Werkstück an unterschiedlichen Spannungen anliegen.

Beispielsweise ist es zur Messung der Stärke des taktilen Kontakts es vorteilhaft, wenn beide Werkstücke ein gegenüberliegendes Elektrodenpaar aufweisen, und wenn an das Elektrodenpaar des ersten Werkstücks eine Betriebsspannung angelegt wird, und das Elektrodenpaar des anderen Werkstücks mit Masse verbunden ist. Es kann auch ein Elektrodenpaar an einer positiven Betriebsspannung anliegen und das andere Elektrodenpaar an einer negativen Betriebsspannung.

Zum Betreiben des Taktilsensors kann es auch vorteilhaft sein, wenn mindestens an das erste Werkstück eine Spannungsdifferenz anlegbar ist, und das zweite Werkstück mit einem A/D-Ausgang verbunden ist.

Beispielsweise ist es zur Messung der Position der Kontaktfläche vorteilhaft, wenn an ein Elastomerstück, insbesondere einen Schaumstoffquader, eine Spannungsdifferenz angelegt wird. Dadurch wirkt das Elastomerstück als Spannungsteiler und es ergibt sich der Vorteil eines einfachen Aufbaus und die Möglichkeit einer Positionsbestimmung der aufgebrachten Kraft in mindestens einer Richtung.

Zur Positionsbestimmung kann auch eine Elektrode eines Elektrodenpaars eines Elastomerstücks an einer Spannung anliegen, während die andere Elektrode dieses Elektrodenpaars nicht angeschlossen ist; gleichzeitig wird das Elektrodenpaar des anderen Elastomerstücks wie bei der Messung der Stärke des Kontaktwiderstandes beschaltet, z. B. mit Masse über einen Widerstand und einen A/D-Wandler. Nach Messung des Gesamtwiderstands wird die Beschaltung der Elektroden des einen Elastomerstücks getauscht, und es wird erneut gemessen. Die beiden Meßwerte des Gesamtwiderstands werden verglichen, wobei sich diejenige Elektrode, die den geringeren Widerstandswert aufweist, näher am Kontaktort befindet.

Einen ähnlichen Beschaltungswechsel kann man auch für das jeweils anderen Elastomerstück durchführen. Setzt man beispielsweise zwei Elastomerstücke ein, deren Elektrodenpaare um 90° gedreht sind, so läßt sich eine Auflösung in x- und y-Richtung der Kraftaufbringung erreichen.

Zur Messung der Ausdehnung der äußeren Druckaufgabe ist es vorteilhaft, wenn bei einer Spannungsdifferenz innerhalb eines Elastomerstücks der Strom gemessen wird, beispielsweise zusätzlich zur Position der Druckaufgabe (siehe oben). Dabei steigt der Strom durch das Elastomerstück, an dem die Spannung anliegt, mit steigender aufgebrachter Kraft an, weil sein Widerstand zwischen den Elektroden durch eine stärkere Parallelschaltung des anderen Elastomerstücks abnimmt. Diese Stromänderung wird ausgemessen, beispielsweise durch Spannungsmessung über einen Widerstand. Bei dieser Methode muß die mindestens eine Elektrode des anderen Elastomerstücks nicht angeschlossen sein, es kann jedoch schaltungstechnisch günstiger sein, sie zu verbinden, beispielsweise mit einem Analog-Digital-Wandlereingang hoher Impedanz.

Es können auch kombinierte Schaltungsanordnungen verwendet werden.

Allgemein existiert im einfachsten Fall annähernd ein Punktkontakt, dessen Widerstand bei Druckaufgabe sinkt. Treten bei einer Druckaufgabe zusätzliche Kontaktpunkte auf oder vergrößert sich die Kontaktfläche, so bildet sich ein Mittelwert des Kontaktwiderstands Rs, welcher den Schwerpunkt des Gesamtkontakts repräsentiert. Dabei geht nicht nur der Flächenschwerpunkt, sondern auch der Druck an den einzelnen Kontaktstellen bzw. den finiten Kontaktflächen in das Resultat ein. So läßt sich eine Aussage über die Position der Kontaktfläche machen, insbesondere bei quaderförmigen Werkstücken, insbesondere aus Schaumstoff.

Der Taktilsensor ist allgemein anwendbar zur Ermittlung von Tastinformationen, beispielsweise bei einer Erkennung einer Sitzplatzbelegung in einem Kraftfahrzeug, zur Auslösung eines Airbags, als Sensor für elektronisches Schlagzeug, als Eingabeelement zur Gerätesteuerung, zur Untersuchung einer Ergonomie, beispielsweise von Autositzen oder Schuhen, zur Belegungserkennung auf Förderbändern, zur Kollisionserkennung an einem Reinigungsroboter oder zur Trainingsunterstützung für Sportler und zum Einsatz bei Fitnessgeräten, z. B. zur Vermessung eines Absprungpunktes beim Hochsprung etc.

Insbesondere bei einem Einsatz des Taktilsensors zum Schutz einer Person bestehen Sicherheitsanforderungen an den Taktilsensor, insbesondere zur Erkennung eines Defekts. Eine Defekterkennung ist einfach durchführbar:
- Bei einem Bruch einer Anschlußleitung ergibt sich bei Anlegen einer Spannung innerhalb eines Elastomerstücks ein unendlich hoher Widerstand, welcher im Normalbetrieb nicht auftritt. Dadurch wird der Defekt erkannt.
- Bei Kurzschluß einer an einer Spannung anliegenden Elektrode treten in einem normalen Betrieb keine Spannungen auf, welche sehr nah an den Betriebsspannungen (z. B. die Anschlußspannungen an den Elektroden von 0 V und 5 V) liegen. Auch dadurch ist eine Defekterkennung möglich.
- Bei einem Kurzschluß der Elektroden zu einem anderen Wert als einer Betriebsspannung (z. B. 0 V und 5 V) läßt sich der Defekt in zwei Fällen erkennen. Zieht der Kurzschluß das Meßsignal aus dem üblichen Arbeitsbereich heraus, so kann dies erkannt werden, beispielsweise per Fuzzylogik. Eine weitere Möglichkeit liegt in der Analyse der auftretenden Frequenzen. Tritt eine Signaländerung auf, die für eine Änderung des Taktilkontaktes zu schnell ist, aber noch vom Meßsystem wahrgenommen werden kann, so kann daraus auf einen Defekt geschlossen werden.
- Bei einem Einsatz des Taktilsensors muß gegebenenfalls mit Vandalismus gerechnet werden, z. B. einem Messereinstich. Dieser darf jedoch nicht zu einem unerkannten Ausfall der Sicherheitssensorik führen. Ein Messereinstich würde z. B. zunächst (solange das Messer steckt) als intensiver taktiler Kontakt gedeutet werden (Ausnahme: Keramikklinge oder Kunststoffklinge). Wird das Messer entfernt, so nimmt der Sensor seine Funktion wieder auf. Dabei entsteht jedoch eine Änderung des Gesamtverhaltens, die bei geeignetem Abgleich mit seiner Normalfunktion auch erkennbar ist.
- Auch ein Entfernen eines Teils des Taktilsensors, beispielsweise bei Vandalismus durch Herausreißen oder Herausschneiden ist dadurch erkennbar, daß sich der Gesamtwiderstand des Taktilsensors vergrößert. Wird der Taktilsensor komplett von seinem Platz entfernt, so kann dies bei unbeschädigten Anschlußdrähten nicht festgestellt werden. Ein Gegenmittel dagegen ist die Möglichkeit, die Anschlußelektroden jeweils beidseitig fest an einem Gehäuse der mit dem Taktilsensor bestückten Anlage zu montieren.

Typische Meßbereiche eines Taktilsensors aus zwei Schaumstoffquadern aus EVAZOTE® liegen im Bereich von 0,04 N (Erkennungsgrenze) bis 5 N (Sättigungsgrenze) und z. B. in einem anderen Fall von 0,5 N (Erkennungsgrenze) bis 50 N( Sättigungsgrenze). Ein kombinierter Meßbereich läßt sich beispielsweise durch Kombination der beiden Taktilsensoren, beispielsweise durch Übereinanderlegen, erreichen. Ein Taktilsensor der Größe (0,75 m x 1 m) weist bei einer Positionsbestimmung eine typische Meßgenauigkeit von ± 1% auf.

Bevorzugt wird zur Auswertung der Sensordaten eine elektronische Schaltung. Diese kann sehr klein aufgebaut werden und insbesondere in das Elastomermaterial des Sensors eingelassen werden. Eine Ansteuerung der Elektroden, beispielsweise eine Spannungsaufgabe, ist über einen Mikrocontroller möglich. Ebenfalls über einen Mikrocontroller kann die Auswertung der Sensordaten vorgenommen werden, beispielsweise die Messung der Position der Kraftaufgabe und des Querwiderstands in eine oder mehr Richtungen. Zudem kann über den Mikrocontroller eine Strommessung über den Kontaktwiderstand Rs über einen Widerstand geschaltet werden.

In den folgenden Ausführungsbeispielen wird der Taktilsensor schematisch näher erläutert.
- Figur 1: zeigt einen Taktilsensor T,
- Figur 2: zeigt ein vereinfachtes Ersatzschaltbild des Taktilsensors T aus Figur 1,
- Figur 3: zeigt einen weiteren Taktilsensor T,
- Figur 4: zeigt ein vereinfachtes Ersatzschaltbild des Taktilsensors T aus Figur 3,
- Figur 5a bis c: zeigt einen herkömmlichen Foliendrucksensor mit Interdigitalstruktur I,
- Figur 6: zeigt den am A/D-Ausgang 6 abgegriffenen Druck gegen die auf den Taktilsensor T aufgegebene Kraft F,
- Figuren 7 bis 10: zeigen verschieden geformte Ausführungsformen des Taktilsensors T.

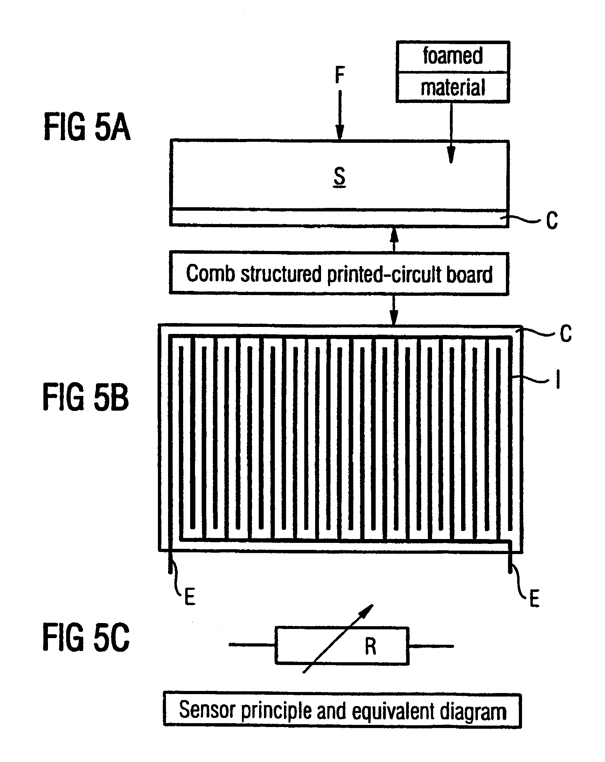

In Figur 5a ist in Seitenansicht ein Foliendrucksensor abgebildet, bei dem ein leitendes Kunststoffmaterial S in Form einer Platte auf einer Platine C aufliegt. Auf der dem Kunststoffmaterial S zugewandten Seite ist die Platine C mit einer Interdigitalstruktur I in Form zweier ineinandergreifender Kammstrukturen bedruckt. Bei einer zunehmenden Kraft F auf das Kunststoffmaterial S sinkt ein elektrischer Widerstand zwischen den beiden Kammstrukturen.

Figur 5b zeigt in Aufsicht die Platine C mit der Interdigitalstruktur I und den Elektroden E.

Figur 5c zeigt ein Ersatzschaltbild zum Foliendrucksensor aus Figur 5a, welches aus einem kraft- bzw. druckabhängigen Widerstand R besteht.

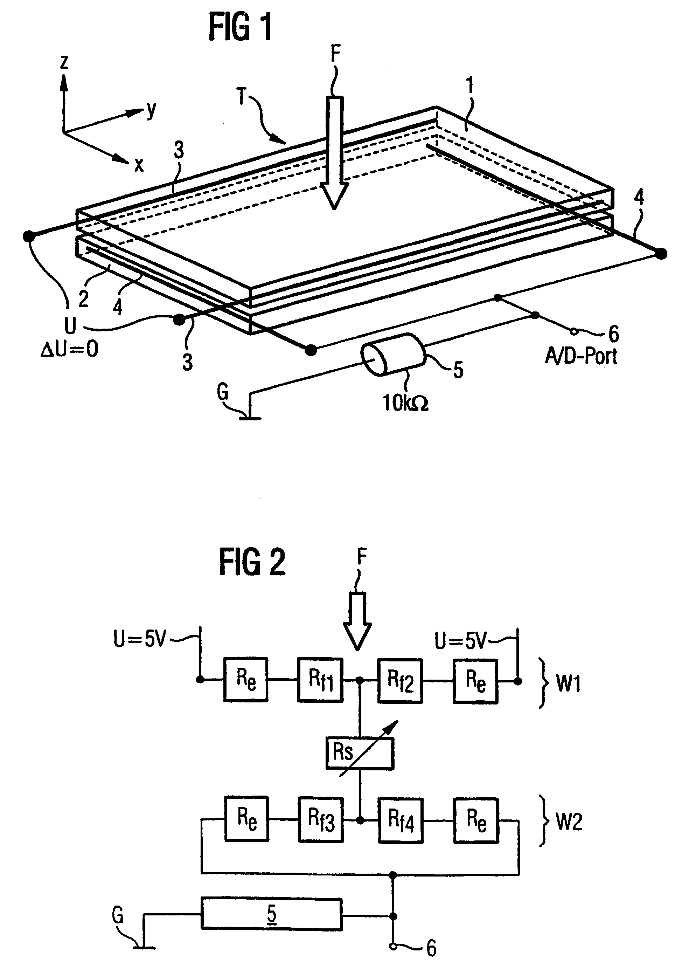

Figur 1 zeigt in Schrägansicht einen Taktilsensor T. Dieser besteht aus einem ersten Werkstück 1 und einem zweiten Werkstück 2, jeweils in Form einer quaderförmigen Schaumstoff-Platte aus EVAZOTE®. Zur besseren Darstellung berühren sich in dieser Figur beide Platten 1,2 nicht, bei einem realen Taktilsensor T liegen diese aber aufeinander an einer Auflagefläche auf.

An zwei an der Auflagefläche (in der (x,y)-Ebene) senkrecht angrenzenden und einander gegenüberliegenden Seitenflächen (in der (y,z)-Ebene) sind über die gesamte Länge der jeweiligen Seitenfläche jeweils eine Elektrode 3 parallel zur Auflagefläche angebracht. Analog ist ein Paar von Elektroden 4 parallel an Seitenflächen (in der (z,x)-Ebene) der zweiten Schaumstoff-Platte 2 angebracht. Dieses Elektrodenpaar 4 ist bezüglich des anderen Elektrodenpaars 3 um 90° um die z-Achse gedreht.

Die mit einer Kraft F beaufschlagbare Tastfläche entspricht der der Auflagefläche abgewandten Seite der ersten Schaumstoff-Platte 1.

Die Elektroden 3 der ersten Schaumstoff-Platte 1 liegen beide auf einer Spannung U von 5 V. Die Elektroden 4 der zweiten Schaumstoff-Platte 2 sind beide über einen Widerstand 5 von R = 10 KΩ mit Masse G verbunden. Mit den Elektroden 4 ist zudem ein Analog/Digital-Ausgang 6 verbunden, der wiederum mit einem A/D-Wandler verbunden sein kann.

Durch die Potentialdifferenz zwischen den Schaumstoff-Platten 1,2 fließt ein Strom durch die Auflagefläche. Der Strom kann z. B. über den A/D-Wandler, beispielsweise verbunden mit einem Mikrocontroller, oder ein Spannungsmeßgerät am Widerstand 5 gemessen werden.

Weil der Innenwiderstand der Schaumstoff-Platten 1,2 und der Übergangswiderstand zwischen den Elektroden 3,4 und den Schaumstoff-Platten 1,2 weitgehend unabhängig von einer Deformation der Tastfläche ist, wird die Stromstärke vor allem durch den Kontaktwiderstand zwischen den Schaumstoff-Platten 1,2 bestimmt.

Bei einer Aufgabe der äußeren Kraft F werden die beiden Schaumstoff-Platten 1,2 gegeneinander gedrückt und so der Kontaktwiderstand Rs verändert, in der Regel gesenkt. Dadurch erhöht sich der Stromfluß, so daß ein Kontakt erkennbar ist.

Figur 2 zeigt ein vereinfachendes Ersatzschaltbild des Taktilsensors T aus Figur 1.

Eine Widerstandskette W1 liegt auf einer Betriebsspannung U = 5 V. Sie weist zwei, möglichst kleine, Widerstände Re analog dem Übergangswiderstand zwischen den Elektroden 3 und der Schaumstoff-Platte 1 auf. Dazwischen sind Innenwiderstände Rf1 und Rf2, geschaltet, die den Innenwiderstand der als Spannungsteiler wirkenden Schaumstoff-Platte 1 darstellen.

Eine andere Widerstandskette W2 mit analogem Aufbau (Re/Rf3/Rf4/Re) liegt in Serie über den externen Widerstand 5 mit R = 10 KΩ an Masse G und direkt am A/D-Ausgang 6 an.

Die beiden Widerstandsketten W1,W2 sind über einen Widerstand Rs, der dem Kontaktwiderstand entspricht, miteinander verbunden. Der Widerstand Rs in abhängig von der aufgebrachten Kraft.

Dieses Ersatzschaltbild repräsentiert zur Vereinfachung den Fall einer nur punktförmigen Kontaktstelle. Rs ist der größte Widerstand, so daß der Gesamtwiderstand der Schaltungsanordnung hauptsächlich durch Rs bestimmt wird. Durch die Innenwiderstände Rf1,...,Rf4 ergibt sich ein Meßfehler, der sich bei Kenntnis des Kontaktortes kompensieren läßt.

Es ist zur Messung des Kontaktwiderstands Rs ausreichend, nur eine Elektrode 3,4 pro Schaumstoff-Platte 1,2 bzw. Widerstandskette W1,W2 zu verwenden. Dann ist es sinnvoll, die Elektroden 3,4 an gegenüberliegenden Seiten anzubringen, weil sich so eine Positionsabhängigkeit der Anordnung aufhebt.

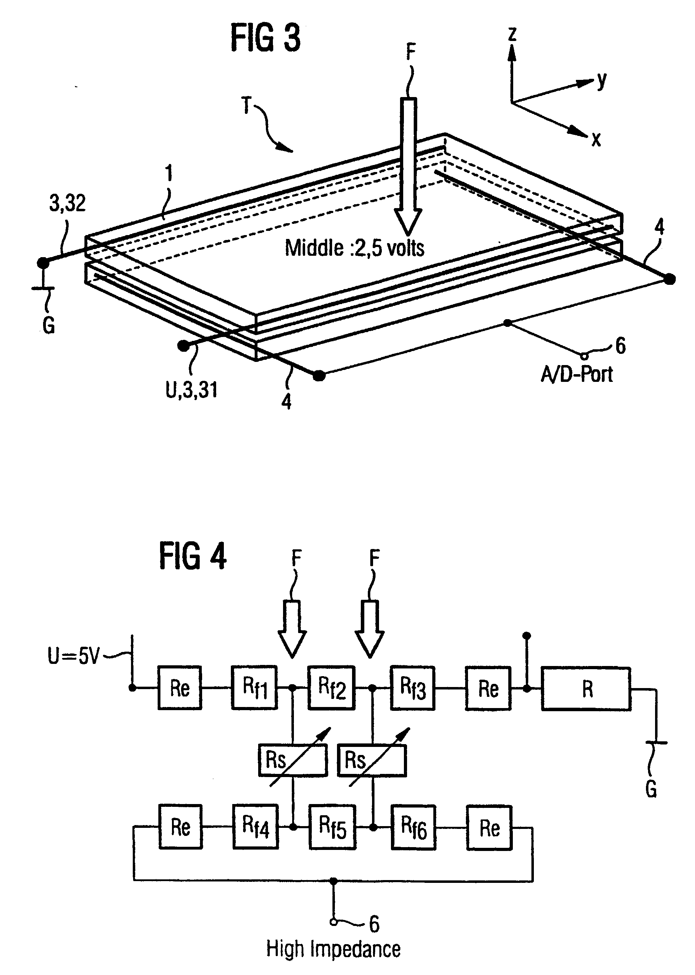

Figur 3 zeigt einen Taktilsensor T, dessen Beschaltung zur Positionsbestimmung der Kraftaufgabe von Figur 1 abweicht.

Die Elektroden 3,31,32 der ersten Schaumstoff-Platte 1 werden nun mit zwei verschiedenen Betriebsspannungen beschaltet, nämlich mit U = 5V an einer ersten Elektrode 31 und durch Verbindung mit einer Masse G mit U = 0V an einer zweiten Elektrode 32. Dadurch ergibt sich ein Spannungsabfall ΔU von 5V innerhalb der ersten Schaumstoff-Platte 1 in x-Richtung, der einen entsprechenden Stromfluß im Material bedingt.

Bei Kraftaufgabe auf die Tastfläche verringert sich der Kontaktwiderstand zwischen den beiden Schaumstoff-Platten 1,2. Die zweite Schaumstoff-Platte 2 nimmt das Potential, das die erste Schaumstoff-Platte 1 an der Kontaktstelle aufweist, an. Treten mehrere Kontaktpunkte bzw. eine größere Kontaktfläche auf, so bildet sich ein Mittelwert des Kontaktwiderstands, der den Schwerpunkt des Gesamtkontakts repräsentiert. Dabei geht nicht nur der Flächenschwerpunkt, sondern auch der Druck an den einzelnen Kontaktstellen in das Resultat ein.

Eine alternative Positionsbestimmung wird realisiert durch Anschluß nur einer der beiden Elektroden 31,32 des Elektrodenpaars 3 an eine Spannung. Das andere Elektrodenpaar 4 ist dann wie in Figur 1 geschaltet. Nach Messung des Gesamtwiderstands wird die Beschaltung der Elektroden 31,32 des einen Elektrodenpaars 3 getauscht, und es wird erneut der Gesamtwiderstand gemessen. Die beiden Meßwerte des Gesamtwiderstands werden verglichen, wobei sich diejenige Elektrode 31,32, die den geringeren Widerstandswert aufweist, näher am Kontaktort befindet. Diese Methode weist allerdings eine größere Ungenauigkeit in der Positionsbestimmung auf als die oben beschriebene.

Mittels der in dieser Figur dargestellten Schaltungsanordnung läßt sich auch die Größe des Gebiets mit verstärktem Kontakt, die Kontaktgröße, feststellen.

Selbstverständlich ist die Beschaltung der beiden Schaumstoff-Platten 1,2 auch untereinander austauschbar.

Figur 4 zeigt ein vereinfachendes Ersatzschaltbild des Taktilsensors T aus Figur 3 mit zwei Kontaktpunkten, welche durch die beiden druckabhängigen Widerstände Rs repräsentiert sind.

Der Gesamtwiderstand der ersten Schaumstoffplatte 1 bei Vorliegen nur eines Kontaktpunktes, entsprechend einer kleinen Kontaktfläche, berechnet sich zu 2·Re + Rf1 + Rf2 + Rf3. Bei einem Druck auf beiden Kontaktpunkten, entsprechend einer größeren Kontaktfläche, beträgt dieser Gesamtwiderstand 2·Re + Rf1 + Rf2 + Rf3 + Rf2/(2·Rs + Rf5/(Rf4 + Rf6 + 2·Re)), und ist damit signifikant kleiner als bei nur einem Kontaktpunkt. Durch eine Messung des Widerstands der ersten Schaumstoffplatte 1, an der der Spannungsabfall geschieht, läßt sich nun eine Aussage über die Kontaktfläche machen, z. B. über eine Änderung der Kontaktfläche oder, nach einer Kalibrierung, über eine absolute Kontaktfläche.

Eine zweidimensionale Ausmessung der Kontaktfläche ist ebenfalls möglich, z. B. durch Erzeugen eines Spannungsabfalls in anderer Richtung, z. B. unter Verwendung der weiteren Schaumstoff-Platte 2, deren Elektroden 4 um 90 ° in der (x,y)-Ebene gedreht angeordnet sind.

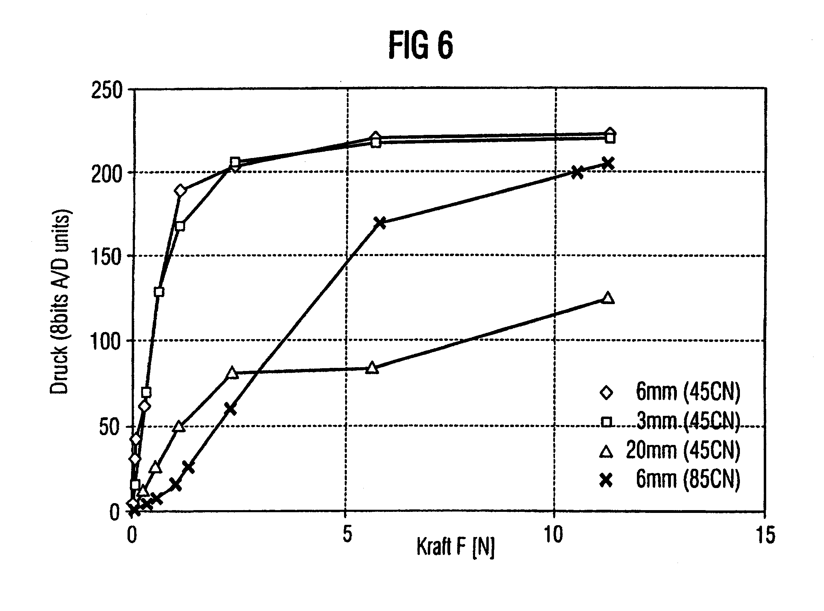

Figur 6 zeigt ein Sensorsignal eines Taktilsensors T nach Figur 1 mit Schaumstoff-Platten 1,2 aus EVAZOTE® bei Variation der Materialeigenschaften der Werkstücke 1,2. Variiert wird die Dicke (in Figur 1 und 3 in z-Richtung) beider Schaumstoff-Platten 1,2 (3 mm, 6 mm, 20 mm) sowie der Schaumstoff (45 CN und 85 CN, wobei die Zahl für eine Dichte und "CN" für eine elektrisch leitende Ausführung steht.)

Das am A/D-Ausgang 6 abgegriffene analoge Signal, das einem Drucksignal entspricht, wird in einen A/D-Wandler eingespeist, welcher das analoge Signal in ein digitales 8-Bit-Signal entsprechend 2⁸ = 256 Werten (="8bits A/D units") umwandelt. Dieses 8-Bit-Signal ist auf der Ordinate aufgetragen. Die Abszisse zeigt die auf die Tastfläche des Taktilsensors T aufgebrachte äußere Kraft F in N.

Man erkennt aus dem Diagramm, daß für 3 mm (Quadrate) und 6 mm (Rhomben) dicke Schaumstoff-Platten 1,2 aus EVAZOTE® EV 45 CN ein ungefähr gleiches Sensorsignal gewonnen wird, welches in einem vergleichsweise kleinen Kraftintervall F = ]≈0 ; 1] N empfindlich reagiert, und für größere Kräfte F > 1 N gegen einen Sättigungswert konvergiert.

Für eine Dicke von 20 mm (Dreiecke) wird der Sättigungswert erst bei F ≈ 2,5 N erreicht.

Bei EVAZOTE® EV 85 CN (Kreuze) ist die Empfindlichkeit bei kleinen Kräften F < 1 N gering, bei größeren Kräften F > 1 N hingegen hoch.

Zur Abdeckung des aufgezeigten Kraftbereichs wäre somit z. B. eine Kombination von Schaumstoff-Platten beider Dicken (3 mm oder 6 mm zusammen mit 20 mm) sinnvoll, z. B. durch Stapelung zweier Taktilsensoren T.

Auch sind zur weiteren Steigerung der Empfindlichkeit mehr als zwei unterschiedliche Schaumstoff-Platten bzw. -dicken möglich.

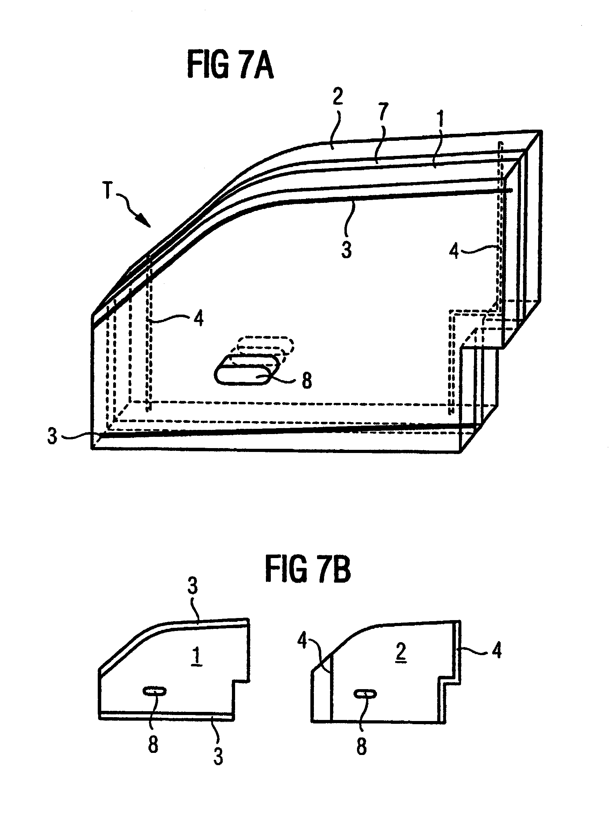

Figur 7a zeigt in Schrägansicht einen Taktilsensor T, der an eine Seitenfläche eines Reinigungsroboters anbringbar ist.

Die Kontur des Taktilsensors T ist der Fläche des Anwendungsgegenstandes, nämlich des Reinigungsroboters, angepaßt. Zwischen des beiden Elastomerstücken 1,2 ist eine nichtleitende, regelmäßig durchbrochene Zwischenschicht 7, z. B. ein Netz oder Klebepunkte, eingefügt. Durch die Folie wird die Detektionsschwelle erhöht.

Zur Befestigung weist der Taktilsensor T zudem eine Aussparung 8 auf, durch die er aufgesteckt werden kann.

Figur 7b zeigt in Seitenansicht das erste Werkstück 1 (links) und das zweite Werkstück 2 (rechts) des Taktilsensors T aus Figur 7a mit den entsprechenden Elektroden 3,4.

Weil ein Spannungsabfall über die Seitenflächen der beiden Werkstücke 1,2 nicht mehr homogen ist, kann es vorteilhaft sein, die Positionsmessung zu korrigieren, z. B. mittels Kalibration. Für einen Reinigungsroboter ist die Genauigkeit der Positionsmessung aber auch ohne Korrektur ausreichend.

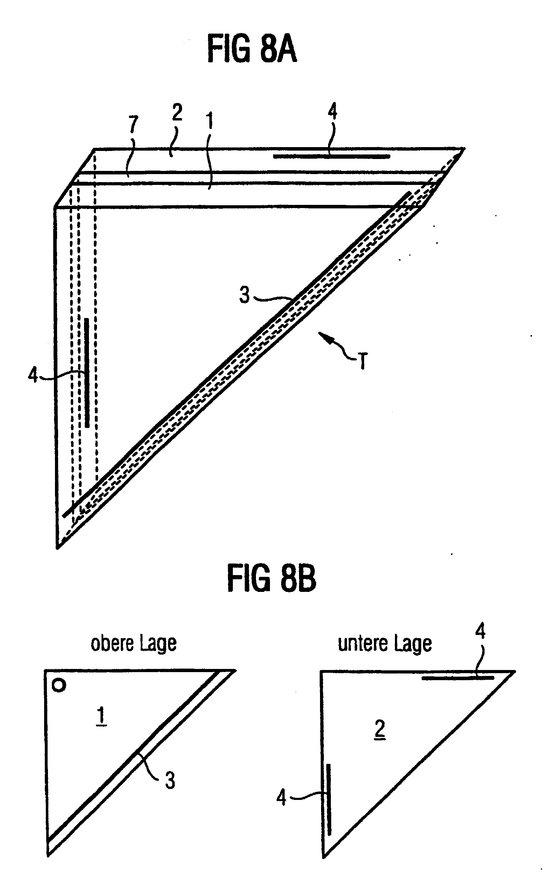

Figur 8a zeigt in Schrägansicht einen Taktilsensor T in Dreiecksform.

Figur 8b zeigt in Seitenansicht das erste Werkstück 1 (links) und das zweite Werkstück 2 (rechts) des Taktilsensors T aus Figur a mit den entsprechenden Elektroden 3,4. Man erkennt, daß die Elektroden 4 des zweiten Werkstücks 2 nicht die ganze Seite abdecken.

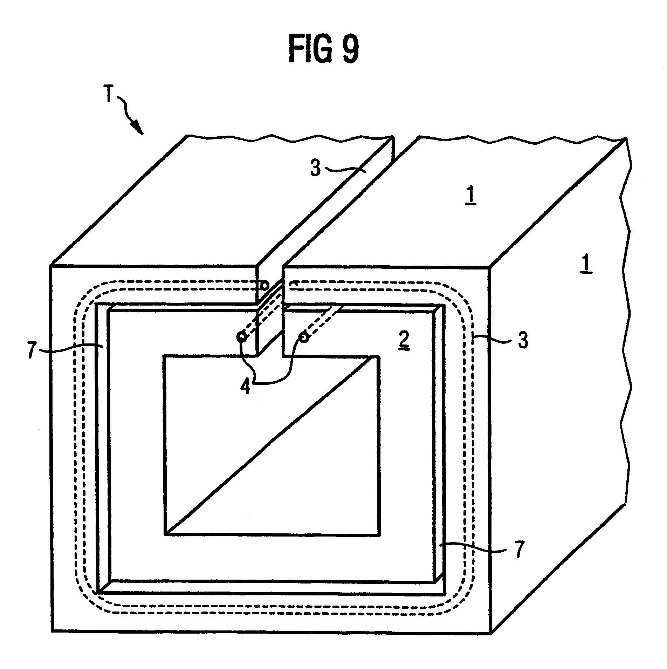

Figur 9 zeigt in Schrägansicht ein Beispiel eines dreidimensional wirkenden Taktilsensors T zur Umhüllung eines Roboterarms. Die zweite Elektrode 3 des ersten, äußeren Werkstücks 1 ist an der anderen Endfläche analog zur hier dargestellten Elektrode 3 angebracht. Der gesamte Armumfang wird so mit nur einem Taktilsensor T abgedeckt.

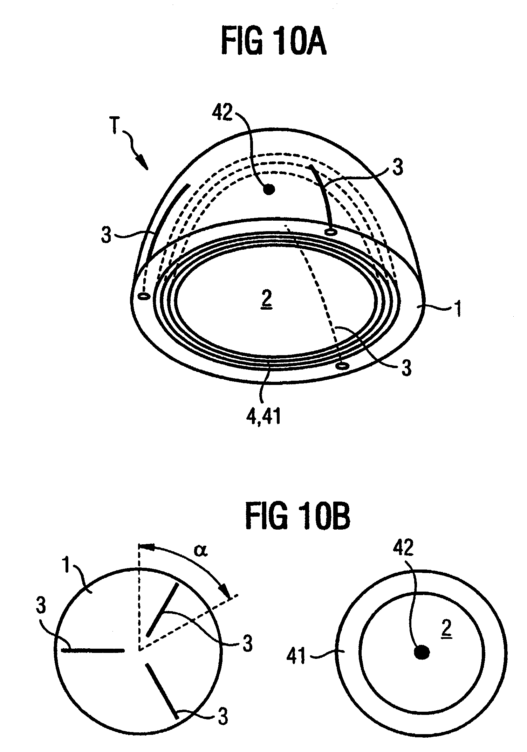

Figur 10 a zeigt in Schrägansicht einen halbschalenförmigen Taktilsensor T. Zur besseren Darstellung liegen die beiden Werkstücke 1,2 nicht aufeinander auf.

Figur 10 b zeigt in Aufsicht das erste, äußere Werkstück 1 (links) und das zweite, innere Werkstück 2 (rechts) des Taktilsensors T aus Figur 10 a mit den jeweiligen Elektroden 3,4.

Das erste Werkstück 1 weist drei Elektroden 3 auf, die rotationssymmetrisch angeordnet sind. Das zweite Werkstück 2 enthält eine ringförmige Elektrode 41 und eine punktförmige Elektrode 42 in ihrer Spitze.

Dieser Taktilsensor T kann so betrieben werden, daß zwischen den Elektrooden 41,42 des zweiten Werkstücks 2 eine Spannungsdifferenz ΔU angelegt wird , deren Stärke den Abstand von der Kugelspitze, dem Ort der punktförmigen Elektrode 42, wiedergibt. Als zweite Koordinate wird ein Winkel α zwischen einem Kontaktpunkt (hier mit "x" bezeichnet) und einer Nullmarke ermittelt.

Weil bei einem Einsatz von nur zwei Elektroden 3 bei der Winkelmessung kein eindeutiges Ergebnis erreichbar ist, werden drei Elektroden 3 im ersten Werkstück 1 eingesetzt. Dazu ist es sinnvoll, jeweils zwei der Elektroden 3 auf eine Betriebsspannung und die dritte Elektrode 3 auf eine andere Betriebsspannung zu legen. Nach einer ersten Messung wird die andere Betriebsspannung einer anderen Elektrode 3 zugeordnet, z. B. durch zyklische Vertauschung, und eine erneute Messung durchgeführt. Dadurch erhöht sich die Genauigkeit einer Ortsbestimmung des Kontaktpunkts.

## Patentansprüche

1. Taktilsensor (T), aufweisend
mindestens ein erstes leitfähiges Werkstück (1) und ein zweites leitfähiges Werkstück (2), die aufeinander an einer Auflagefläche aufliegen, wovon mindestens ein Werkstück (1,2) aus Elastomer gefertigt ist, wobei das Elastomer ein Schaumstoff ist,
so dass
ein mindestens von einem Druck auf die Auflagefläche abhängiger Kontaktwiderstand zwischen den beiden Werkstücken (1,2) meßbar ist.

2. Taktilsensor (T) nach Anspruch 1, bei dem
mindestens zwei aufeinander liegende Werkstücke (1,2) aus Elastomer gefertigt sind.

3. Taktilsensor (T) nach einem der Ansprüche 1 oder 2, bei dem zwischen dem ersten leitfähigen Werkstück (1) und dem zweiten leitfähigen Werkstück (2) eine Zwischenschicht eingebracht ist.

4. Taktilsensor (T) nach einem der Ansprüche 1 bis 3, bei dem jedes Werkstück (1,2), das aus Elastomer gefertigt ist, mindestens eine Elektrode, insbesondere aus Drahtgestrick, aufweist, welche an das jeweilige Werkstück angedrückt wird.

5. Taktilsensor (T) nach Anspruch 4, bei dem
beide Werkstücke (1,2) quaderförmig sind, an denen jeweils zwei Elektroden (3,4,31,32) entlang gegenüberliegender Seitenflächen angebracht sind.

6. Taktilsensor (T) nach einem der vorherigen Ansprüche, bei dem das Elastomer der Schaumstoff EVAZOTE® ist.

7. Taktilsensor (T) nach einem der vorherigen Ansprüche, bei dem mehr als zwei Werkstücke (1,2) aufeinander aufliegen, und mindestens zwei dieser Werkstücke (1,2) sich in ihrer Dicke und/oder in ihrer Materialeigenschaft unterscheiden.

8. Taktilsensor (T) nach Anspruch 1, bei dem
mindestens ein Werkstück (3) aus Elastomer und das andere Werkstück (4) aus flächigem Metall gefertigt ist.

9. Verfahren zum Betrieb eines Taktilsensors (T) nach einem der Ansprüche 1 bis 8, bei dem
- an das erste Werkstück (1) eine erste Spannung (U) angelegt wird,
- an das zweite Werkstück (2) eine zweite Spannung angelegt wird
- und das zweite Werkstück mit einem Analog/Digital-Ausgang (6) verbunden wird.

10. Verfahren zum Betrieb eines Taktilsensors (T) nach einem der Ansprüche 1 bis 8, bei dem
- an das erste Werkstück (1) eine Spannungsdifferenz (ΔU) angelegt wird, und
- das zweite Werkstück (2) mit einem Analog/Digital-Ausgang (6) verbunden wird.

## Claims

1. Tactile sensor (T), having
at least one first conductive workpiece (1) and one second conductive workpiece (2) which bear on one another at a bearing area, at least one workpiece (1, 2) of which is produced from elastomer, the elastomer being a foam,
with the result that
it is possible to measure a contact resistance between the two workpieces (1, 2), which contact resistance is dependent at least on a pressure on the bearing area.

2. Tactile sensor (T) according to Claim 1, in which at least two workpieces (1, 2) lying one on top of the other are produced from elastomer.

3. Tactile sensor (T) according to either of Claims 1 and 2, in which an intermediate layer is introduced between the first conductive workpiece (1) and the second conductive workpiece (2).

4. Tactile sensor (T) according to one of Claims 1 to 3, in which each workpiece (1, 2), which is produced from elastomer, has at least one electrode, in particular made of wire mesh, which is pressed onto the respective workpiece.

5. Tactile sensor (T) according to Claim 4, in which both workpieces (1, 2) are parallelepipedal, on each of which two electrodes (3, 4, 31, 32) are fitted along opposite side areas.

6. Tactile sensor (T) according to one of the preceding claims, in which the elastomer is the foam EVAZOTE®.

7. Tactile sensor (T) according to one of the preceding claims, in which more than two workpieces (1, 2) bear on one another, and at least two of these workpieces (1, 2) differ in their thickness and/or in their material property.

8. Tactile sensor (T) according to Claim 1, in which at least one workpiece (3) is composed of elastomer and the other workpiece (4) is produced from sheet metal.

9. Method for operating a tactile sensor (T) according to one of Claims 1 to 8, in which
- a first voltage (U) is applied to the first workpiece (1)
- a second voltage is applied to the second workpiece (2), and the second workpiece is connected to an analogue/digital output (6).

10. Method for operating a tactile sensor (T) according to one of Claims 1 to 8, in which
- a voltage difference (ΔU) is applied to the first workpiece (1), and
- the second workpiece (2) is connected to an analogue/digital output (6).

## Revendications

1. Capteur tactile (T) comprenant au moins un premier élément (1) conducteur et un deuxième élément (2) conducteur superposés sur une surface de support, au moins un élément (1, 2) étant en élastomère, l'élastomère étant une mousse, permettant de mesurer une résistance de contact entre les deux éléments (1, 2) dépendant d'au moins une pression sur la surface de support.

2. Capteur tactile (T) selon la revendication 1, dans lequel au moins deux éléments (1, 2) superposés sont en élastomère.

3. Capteur tactile (T) selon l'une quelconque des revendications 1 ou 2, dans lequel entre le premier élément (1) conducteur et le deuxième élément (2) conducteur une couche intermédiaire est insérée.

4. Capteur tactile (T) selon l'une quelconque des revendications 1 à 3, dans lequel chaque élément (1, 2) en élastomère présente au moins une électrode, notamment sous la forme d'un tricotage de fils métalliques, qui est pressée contre l'élément respectif.

5. Capteur tactile (T) selon la revendication 4, dans lequel les deux éléments (1, 2) sont parallélépipèdes sur lesquels respectivement deux électrodes (3, 4, 31, 32) sont disposées le long de surfaces latérales opposées.

6. Capteur tactile (T) selon l'une quelconque des revendications précédentes, dans lequel l'élastomère est la mousse EVAZOTE®.

7. Capteur tactile (T) selon l'une quelconque des revendications précédentes, dans lequel plus de deux éléments (1, 2) sont superposés, et au moins deux de ces éléments (1, 2) sont différents l'un de l'autre au niveau de leur épaisseur et/ou de leur propriétés matérielles.

8. Capteur tactile (T) selon la revendication 1, dans lequel au moins un élément (3) est enlélastomère et l'autre élément (4) en un métal plan.

9. Procédé d'exploitation d'un capteur tactile (T) selon l'une quelconque des revendications 1 à 8, dans lequel
- une première tension (U) est appliquée au premier élément (1),
- une deuxième tension est appliquée au deuxième élément (2),
- le deuxième élément est relié à une sortie analogique/numérique (6).

10. Procédé d'exploitation d'un capteur tactile (T) selon l'une quelconque des revendications 1 à 8, dans lequel
- une tension différentielle (ΔU) est appliquée au premier élément (1), et
- le deuxième élément (2) est relié à une sortie analogique/numérique (6).
